# EUROPÄISCHE PATENTSCHRIFT

(11) **EP 0 778 928 B1**
(45) Veröffentlichungstag und Bekanntmachung des Hinweises auf die Patenterteilung: **15.12.1999**
(21) Anmeldenummer: 95928416.7
(22) Anmeldetag: 01.08.1995
(51) Int. Cl.: F16L 15/06

(54) **ROHRVERBINDER**
PIPE JOINT
RACCORD DE TUYAUX

(30) Priorität: 29.08.1994 DE 4431377
(43) Veröffentlichungstag der Anmeldung: 18.06.1997
(73) Patentinhaber: MANNESMANN Aktiengesellschaft, 40213 Düsseldorf (DE)
(72) Erfinder: QUADFLIEG, Erich, Dr.-Ing., 47800 Krefeld (DE); BUNSEN, Christoph, Dr.-Ing., 40721 Hilden (DE); GIGOWSKI, Thomas, Dr.-Ing., 41517 Grevenbroich (DE); LENZE, Friedrich, Dr.-Ing., 40885 Ratingen (DE); SCHLÜTER, Martin, Dipl.-Ing., 40227 Düsseldorf (DE)
(74) Vertreter: Meissner, Peter E., Dipl.-Ing.
(86) Internationale Anmeldenummer: DE9501059
(87) Internationale Veröffentlichungsnummer: WO9607044

(56) Entgegenhaltungen:
- GB-A- 786 652
- GB-A- 2 146 084
- GB-A- 2 146 086
- US-A- 2 669 468
- US-A- 5 060 740

## Beschreibung

Die Erfindung betrifft einen Rohrverbinder gemäß dem Gattungsbegriff der unabhängigen Ansprüche 1,2,4,12.

Rohrverbinder dienen zum Verbinden rohrförmiger Elemente, beispielsweise von Rohrleitungen, die insbesondere unter Druck stehende Fluide, wie beispielsweise Gas oder Öl befördern. Bei der Suche nach Öl oder Gas werden diese Rohre als Futter- oder Förderrohre eingesetzt.

Die hier betrachteten Rohrverbindungen erfolgen üblicherweise mit Gewinden, einem Außengewinde auf einem Zapfenelement und einem Innengewinde in einem Muffenelement, die miteinander verschraubt werden. Bezüglich der nach dem Verschrauben eindeutigen Positionierung unterscheidet man Rohrverbinder mit einer aufgebrachten Markierung und solche, die ein zusätzliches Stoßelement als Innen- oder Außenschulter aufweisen. Dieses Schulterelement kann zusätzlich die Funktion einer Dichtung übernehmen. Die Schulter besteht im wesentlichen aus ringförmigen Flächen, die beispielsweise am freien Ende des Zapfenelementes und der Innenseite des Muffenelementes angeordnet sind und durch das Zusammenschrauben fest aufeinandergepreßt werden. Bei einer Innenschulter wird das Zapfenelement zwischen der Schulter und dem Gewinde zusammengedrückt und das Muffenelement zwischen der Schulter und dem Gewinde gedehnt, bei einer Außenschulter wird das Zapfenelement zwischen der Schulter und dem Gewinde gedehnt und das Muffenende zwischen der Schulter und dem Gewinde zusammengedrückt. Die durch die Flächenpressung in der Schulter bewirkten Spannungen in Muffe und ZaDfen werden überwiegend nur durch die wenigen letzten Gewindezähne des Gewindes, die benachbart zu den Schulterflächen liegen, aufgenommen. Die übrigen Gewindezähne sind nur äußerst gering belastet. Dementsprechend sind die belasteten Gewindezähne hoch beansprucht. Diese hohen Spannungen im Gewinde werden durch äußere Belastungen der Verbindung, insbesondere durch axialen Zug bzw. Druck, aber auch durch Innen- und Außendruck sowie durch Biegung erhöht, so daß die Gesamtspannung einen Wert erreichen kann, der größer ist als die zulässige Streckgrenze. Axialer Zug kann die Vorspannung im Stoß und damit seine Wirkung der Positionierung und Dichtung aufheben, axialer Druck kann zur plastischen Verformung im Schulterbereich führen und bei nachfolgender Zugbelastung die Funktion der Positionierung und Dichtung unwirksam machen.

Um die auf die Abdichtflächen (Stoß) einwirkenden Kräfte als Reaktionskräfte auf eine möglichst große Anzahl von Gewindezähnen aufzuteilen, ist in der DE 34 31 808 A1 ein speziell ausgebildeter Rohrverbinder offenbart. Bei diesem Vorschlag weist der Rohrverbinder einen Zwischenabschnitt des Gewindes zwischen den Enden des Zapfen- und Muffengewindes auf, in dem beide Elemente die gleiche Steigung haben. In den Endenabschnitten sind die Steigungen zwischen Zapfen- und Muffengewinde verschieden, und zwar in Abhängigkeit von der Lage des Stoßes:

Wenn die ringförmigen Abdichtflächen (Stoß) an der Rohrinnenseite liegen, dann weist das Gewinde des Zapfenelementes gegenüber dem Gewinde des Muffenelementes eine größere Steigung auf, wenn die Abdichtfläche an der Rohraußenseite liegt, ist es umgekehrt. Durch die vorgeschlagene Anordnung soll die vom Stoß herrührende Reaktionskraft gleichmäßig auf die Gewindezähne übertragen werden. Dabei werden jedoch Belastungen, wie axiale Kompression und Biegung, weiterhin zum großen Teil in den bereits durch die Verschraubung erheblich vorgespannten Stoß eingeleitet. Am Ende der Beschreibung wird in der genannten Schrift darauf hingewiesen, daß die zuvor erläuterte Konstruktion auch bei einem Rohrverbinder mit einem mehrgängigen Gewinde anwendbar ist.

Aufgabe der Erfindung ist es, einen Rohrverbinder anzugeben, der einfach herstellbar und mit dem eine Lastaufnahme für alle äußeren Belastungen der Verbindung überwiegend über das Gewinde erreicht wird. Dabei sollen Belastungen, die bekannte Verbindungskonstruktionen mit Stoßschulter besonders gefährden, wie axiale Kompression und Biegung, nicht mehr allein vom Stoß, sondern zum überwiegenden Teil vom Gewinde aufgenommen werden. Darüber hinaus ist eine gleichmäßige Verteilung aller Lasten auf das Gewinde angetrebt.

Diese Aufgabe wird mit den im kennzeichnenden Teil des Hauptanspruches 1 und den in den Nebenansprüchen 2, 4, 12 angegebenen Merkmalen gelöst. Vorteilhafte Weiterbildungen sind Bestandteil von Unteransprüchen.

Beim erfindungsgemäßen Rohrverbinder, unabhängig, ob ein ein- oder mehrgängiges Gewinde vorliegt, weist ein Element, vorzugsweise das Zapfenelement, eine sich über die gesamte Gewindelänge erstreckende konstante Steigung auf, bei mehrgängigen Gewinden gleiche konstante Steigungen. Dies hat den großen Vorteil, daß mit relativ einfachen Mitteln ein beschädigtes Zapfengewinde nachgeschnitten werden kann. Das besonders gestaltete und teilweise mit größerem technischen Aufwand hergestellte Muffenelement wird bei Beschädigung ausgetauscht. Vom Erfindungsgedanken her ist aber eine besondere Ausgestaltung des Zapfenelementes ebenso möglich. Der Erfindungsgedanke läßt sich ohne weiteres auf Integralverbinder übertragen.

Die konstruktive Ausbildung des Muffenelementes ist so gestaltet, daß in Verschraubposition eine axiale Verspannung im Gewinde erzeugt wird. Dies kann auf verschiedene Art und Weise erfolgen.

Die axiale Verspannung des Gewindes wird durch verschiedene Steigungen in Muffen- und Zapfengewinde erzeugt. Diese verschiedenen Steigungen sind so festgelegt, daß in Verschraubposition immer mindestens die Lastflanke in einem Bereich des Gewindes verspannt ist gegen die Führungsflanke in einem anderen Bereich des Gewindes. Je nach Auslegung der Steigungen erfolgt die Verspannung an den Rändern des Gewindes oder etwa im mittleren Bereich des Gewindes.

Eine besondere Rolle bei dem vorliegenden Erfindungsgedanken spielen die mehrgängigen, vorzugsweise die zweigängigen Gewinde. Weist ein Gang eines Elementes eine andere Steigung auf als der zweite bzw. als die anderen Gänge und die Gänge des anderen Elementes, so lassen sich besondere Formen der Gewindeverspannung erreichen. Hierfür ist jedoch nicht nur die unterschiedliche Steigung von maßgeblichem Einfluß, sondern auch die Position, die diese Gänge zueinander einnehmen. Beim Gewindeschneiden ist demzufolge ein Startversatz zu berücksichtigen, den das schneidende Werkzeug einzuhalten hat. Aufgrund dieses Startversatzes und der verschiedenen Steigungen entstehen die Gewindeverspannungen, wie sie in den Ansprüchen aufgeführt sind. Dies gilt auch, wenn mehr als ein Gang eine andere Steigung als die übrigen Gänge aufweist.

Gemeinsam ist allen vorgestellten Konstruktionen der wesentliche Erfindungsgedanke, durch eine Abweichung der Steigung eine Verspannung der Lastflanke in einem Gewindebereich gegen die Führungsflanke im selben oder in einem anderen Bereich zu bewirken. Zusätzlich sind die Gewinde so ausgelegt, daß die Kontur der Gewindelücken in allen lastaufnehmenden Gängen und Bereichen eines Elementes gleich ist. Das bedeutet, daß das Gewinde vom Werkzeug in einem letzten Schnitt seine fertigungsgerechte Zahn- und Lückenkontur enthält. Bei mehrgängigen Gewinden können durch die Steigungsunterschiede verschiedene Zahnbreiten entstehen, die Lückenweite des Gewindes bleibt dagegen gleich. Der wesentliche Vorteil dieser gleichen Gewindelücken ist, daß die Gewinde mit einem Schneidwerkzeug hergestellt werden können und nicht zwei Werkzeuge in der Drehbank zueinander positioniert werden müssen, bzw. kein zweiter Fertigschnitt mit exakter Positionierung des Werkzeuges zur Herstellung eines gewünschten Lückenprofils notwendig ist.

Die Konstruktion schließt einen Stoß als Positionierungselement oder als zusätzliches Stützelement zur Aufnahme extremer Axialdruckbelastungen oder Biegung nicht aus. Axiale Kompression und die Druckkomponente der Biegung werden aber auch in diesem Fall überwiegend vom Gewinde übernommen und dadurch eine Überlastung der Stoßschulter verhindert.

Das Gewinde kann zylindrisch, kegelig oder beliebig geneigt ausgeführt werden. Die Zahnform selbst ist von untergeordneter Bedeutung.

Durch gleichmäßige Belastung der Gewindebereiche kann die Zahnhöhe des Gewindes verglichen mit herkömmlichen Verbindern reduziert werden. In gleichem Maße wird der Verbinder in seiner Bauhöhe kleiner, was zur Vergrößerung der Ringraumquerschnitte in Bohrungen führt, bzw. schlankere Verrohrungen erlaubt. Andererseits kann unter Beibehaltung der Zahnhöhe die Axialdruck- oder Biegebelastbarkeit der Verbindung erhöht werden, ebenso das Verschraubmoment. Erhöhte Biegebelastbarkeit und erhöhtes Verschraubmoment sind von besonderem Vorteil, z. B. bei rotierendem Einbau oder Zementieren von Futterrohren bei abgelenkten oder Horizontalbohrungen. Dadurch kann der hohe Reibungswiderstand der Bohrlochwand oder des Zementes überwunden werden, ohne die Verbindungen zu überlasten bzw. zu schädigen.

In der Zeichnung wird anhand einiger Ausführungsbeispiele der erfindungsgemäße Rohrverbinder näher erläutert.

Es zeigen:
- Figur 1: einen Längsschnitt durch einen Rohrverbinder mit Muffe
- Figur 2: einen Längsschnitt durch einen Rohrverbinder als Integralverbindung
- Figur 3: einen Längsschnitt durch ein Muffen- und ein Zapfengewinde in Einzeldarstellung (a,b) und in verschraubter Position (c), wobei das Muffengewinde eine größere Steigung als das Zapfengewinde aufweist. Die zur Verspannung führenden Übermaße im verschraubten Zustand sind als Durchdringungen dargestellt. Zusätzlich sind zugeordnet zu den Zähnen in Figur c darunter in einem Diagramm (d) jeweils Durchdringung und Spiel der Flanken aufgetragen.
- Figur 4: analog Figur 3 mit einem Muffengewinde mit größerer Steigung als das Zapfengewinde und mittigem Steigungsversatz.
- Figur 5: analog Figur 3 mit einem zweigängigen Muffen- und Zapfengewinde, wobei die Steigung eines Ganges des Muffengewindes größer ist als die der anderen Gewindegänge und der Startversatz so festgelegt ist, daß eine progressive Lastflanken-Verspannung mit konstanter Führungsflanken-Verspannung kombiniert wird.
- Figur 6: analog Figur 5 mit einem Startversatz, der eine progressive Führungsflankenverspannung mit konstanter Lastflankenverspannung bewirkt.

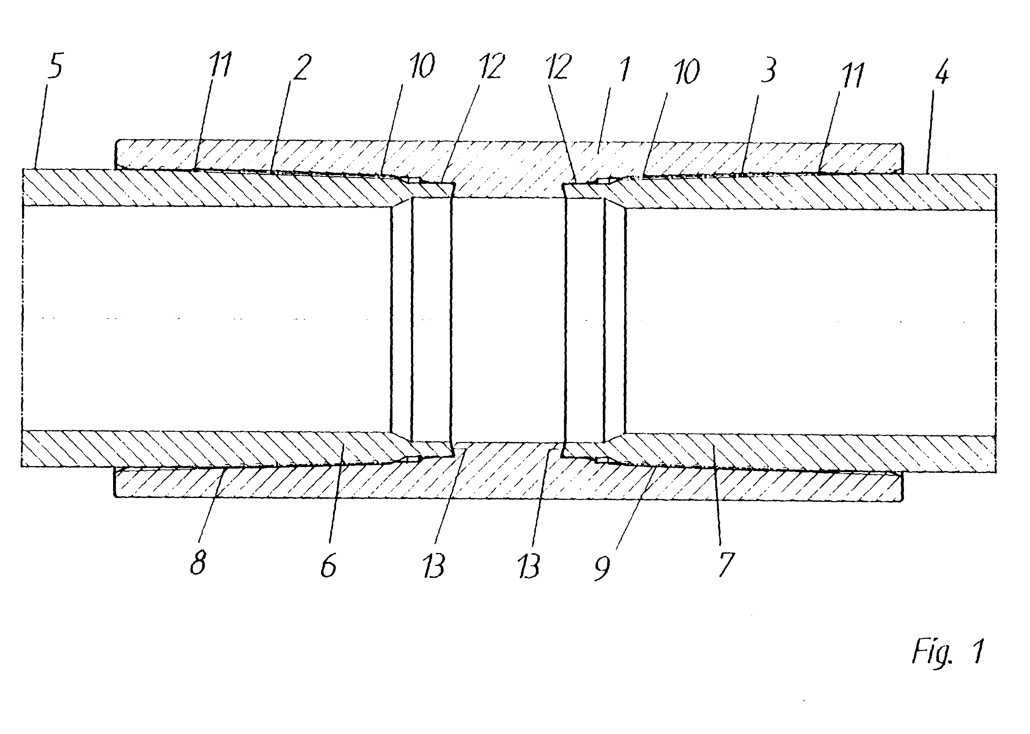

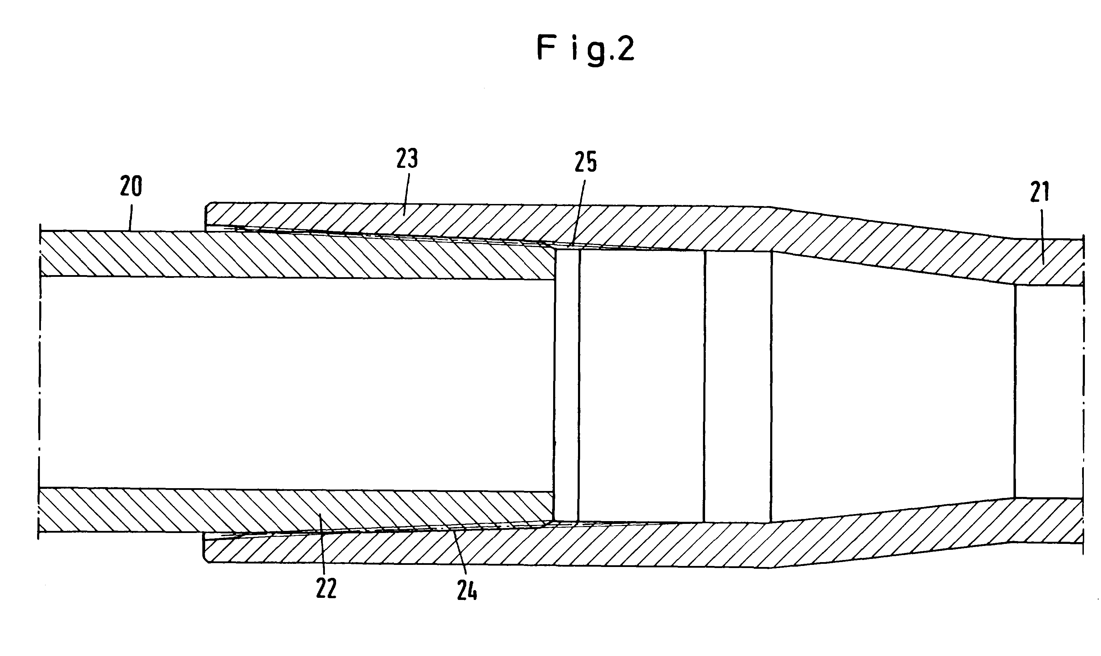

In den Figuren 1 und 2 sind in einem Längsschnitt Rohrverbinder dargestellt, und zwar in Figur 1 mit einer Muffe und in Figur 2 als Integralverbindung. Der erstgenannte Rohrverbinder besteht aus einer Muffe 1, die mit zwei konisch ausgebildeten Gewindeabschnitten 2,3 versehen und im mittleren Bereich beidseitig je einen Dichtsitz 12 und einen Stoß 13 aufweist. Auf die Darstellung der Einzelheiten von Dichtsitz und Stoß wird hier verzichtet, da diese nicht erfindungswesentlich sind. Die beiden zu verbindenden Rohre 4,5 sind im Endbereich als Zapfenelement 6,7 ausgebildet und weisen komplementär zum Gewinde der Muffe 1 ebenfalls konisch ausgebildete Gewindeabschnitte 8,9 auf. Die Ziffer 10 markiert das zapfenstirnseitige Gewindeende, die Ziffer 11 das muffenstirnseitige. Im Unterschied zu Figur 1 entfällt bei der in Figur 2 dargestellten Integralverbindung die Muffe. Die beiden zu verbindenden Rohre 20,21 sind in ihren Endbereichen zum einen als Zapfenelement 22 und zum anderen als Muffenelement 23 ausgebildet. Die beiden Elemente 22,23 weisen je einen komplementär zueinander konisch ausgebildeten Gewindeabschnitt 24,25 auf. Auf die Darstellung von Stoß und Dichtsitz ist verzichtet worden.

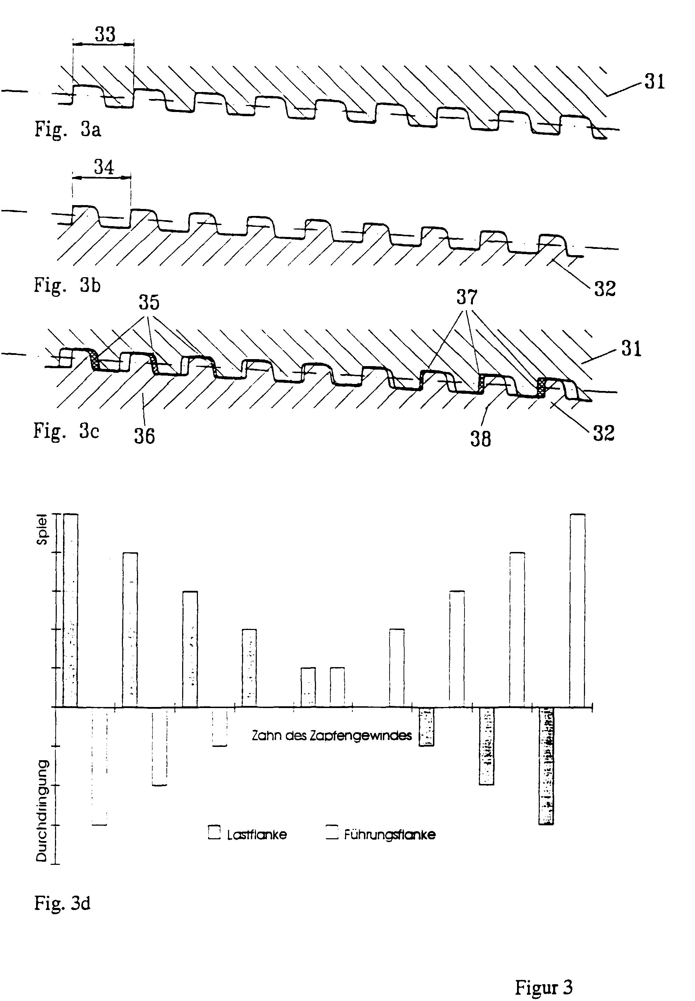

In den Figuren 3 bis 6 sind jeweils Längsschnitte von Muffen- und Zapfengewinden, je in Einzeldarstellung (Muffe Fig. a, Zapfen Fig. b) und in verschraubter Position (Fig. c), dargestellt. Die den Erfindungsgedanken repräsentierenden Steigungsunterschiede sind stark übertrieben gezeichnet, um den Effekt deutlich darstellen zu können. In verschraubter Position sind statt der Verspannungen, die aufgrund von Übermaßen entstehen, Durchdringungen dargestellt. Die Verschraubposition ist so bestinmt, daß die Summe der Durchdringungen der Lastflanken gleich der Summe der Durchdringungen der Führungsflanken ist. Muffe und Zapfen befinden sich also in diesen Darstellungen im Kräftegleichgewicht. Äußere Kräfte und innere Reibung sowie Nichtlinearitäten zwischen Verspannung und Verformung bleiben in den Darstellungen unberücksichtigt. Zusätzlich zu den Längsschnitten zeigen die Figuren im unteren Teil je ein Diagramm (Flg. d) mit zugehöriger Durchdringung bzw. Spiel der Flanken. Diese Diagramme geben jeweils das Maß von Durchdringung und Spiel qualitativ wieder.

Figur 3a zeigt einen Längsschnitt durch ein Muffengewinde 31 mit größerer Steigung 33 als die Steigung 34 des Zapfengewindes 32 in Figur 3b. Man sieht in Figur 3c die Durchdringungen 35 der Führungsflanken im muffenstirnseitigen Gewindeauslauf 36 und die Durchdringung 37 der Lastflanken im zapfenstirnseitigen Gewindeauslauf 38. Die Durchdringungen sind kreuzschraffiert hervorgehoben. Das Maß der Durchdringungen ist qualitativ im Diagramm 3d abzulesen.

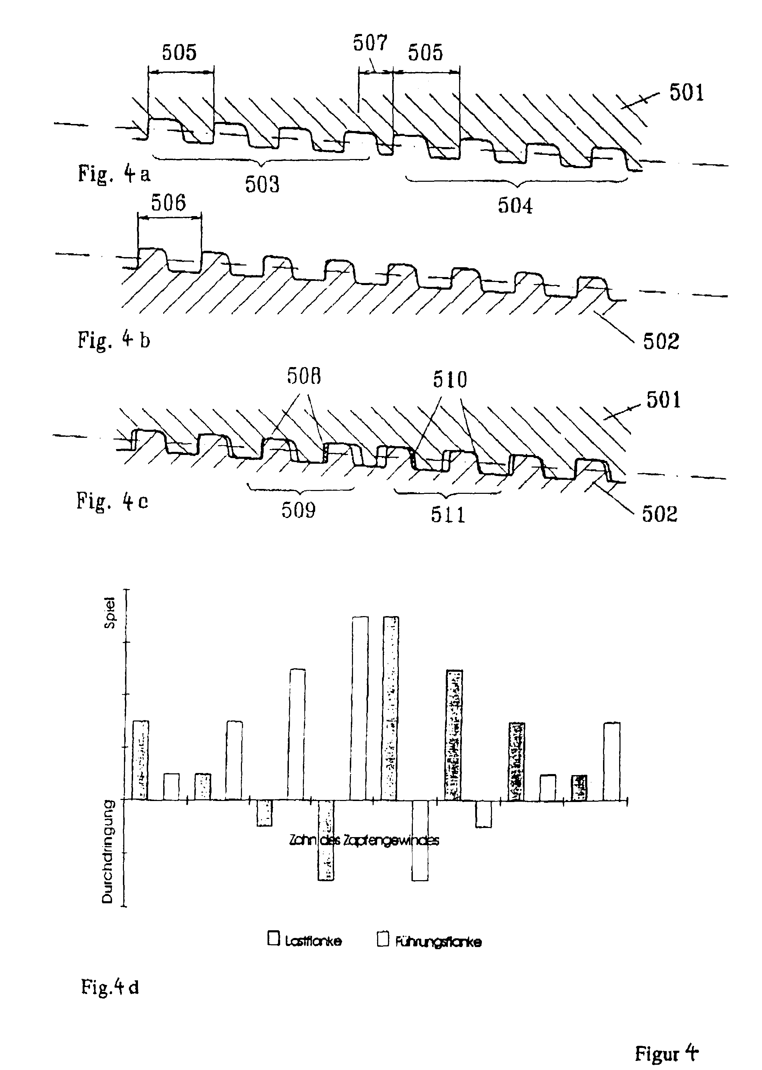

Figur 4a zeigt einen Längsschnitt durch ein Muffengewinde 501 mit zwei Bereichen 503,504 mit größerer Steigung 505 als die Steigung 506 des Zapfengewindes 502 in Figur 4b. Zusätzlich verfügt das Muffenelement über einen Steigungsversatz 507.

Man sieht in Figur 4c die Durchdringungen 508 der Lastflanken in dem dem Versatz muffenstirnseitig benachbarten Gewindebreich 509 und die Durchdringung 510 der Führungsflanken in dem dem Versatz zapfenstirnseitig benachbarten Gewindebereich 511. Die Durchdringungen sind wiederum kreuzschraffiert hervorgehoben. Das Maß der Durchdringungen ist qualitativ im Diagramm 4d abzulesen.

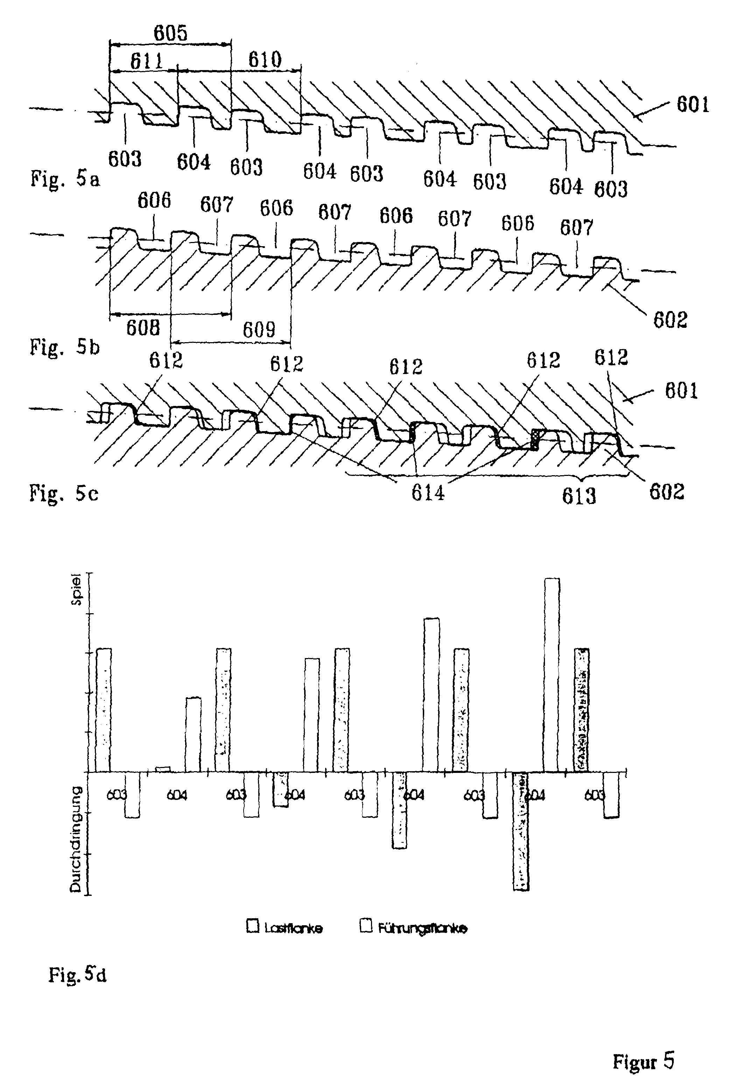

Figur 5a zeigt einen Längsschnitt durch ein Muffengewinde 601 mit zwei Gängen 603,604 wobei der Gang 603 die gleiche Steigung 605 aufweist, wie in Figur 5b die Gänge 606,607 des Zapfengewindes 602 mit den Steigungen 608,609. Der zweite Gang 604 des Muffengewindes 601 hat eine größere Steigung 610. Die Gänge 603,604 des Muffengewindes 601 haben einen Startversatz 611 zueinander. Man sieht in Figur 5c die Durchdringungen 612 der Führungsflanken in den Gängen 603,606 und die zum zapfenstirnseitigen Gewindeende 613 hin progressiv zunehmenden Durchdringungen 614 der Lastflanken. Durchdringungen sind wiederum kreuzschraffiert hervorgehoben. Ihr Maß ist qualitativ im Diagramm 5d abzulesen.

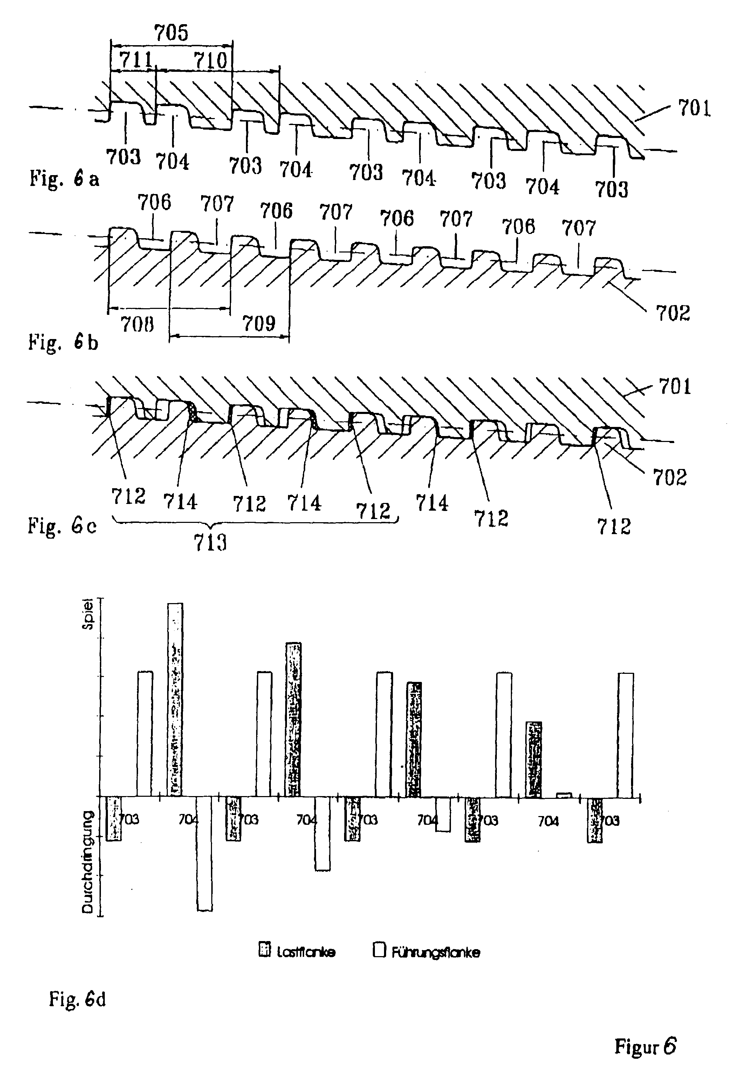

Figur 6a schließlich zeigt einen Längsschnitt durch ein Muffengewinde 701 mit zwei Gängen 703,704, wobei der Gang 703 die gleiche Steigung 705 aufweist, wie in Figur 6b wie die Gänge 706,707 des Zapfengewindes 702 mit den Steigungen 708,709. Der zweite Gang 704 des Muffengewindes 701 haben einen Startversatz 711 zueinander. Man sieht in Figur 6c die Durchdringungen 712 der Lastflanken in den Gängen 703,707 und die zum muffenstirnseitigen Gewindeende 713 hin progressiv zunehmenden Durchdringungen 714 der Führungsflanken. Die Durchdringungen sind wiederum kreuzschraffiert hervorgehoben. Das Maß der Durchdringungen ist wiederum qualitativ im Diagramm 6d abzulesen.

## Patentansprüche

1. Rohrverbinder mit einem Muffenelement (1, 23), das ein Innengewinde (2, 3, 25) und mit einem Zapfenelement (6, 7, 22), das ein damit verschraubbares Außengewinde (8, 9, 24) aufweist, wobei die Gewinde des Zapfen- und des Muffenelementes voneinander abweichende Steigungen aufweisen und sich an die Gewindeabschnitte ein gewindefreier Abschnitt anschließen kann, der gegebenenfalls als metallischer Dichtsitz ausgebildet ist,
dadurch gekennzeichnet,
daß das Zapfenelement (32) eine durchgehende konstante Steigung (34) aufweist und das Muffenelement (31) eine konstante größere Steigung (33) aufweist, so daß am muffenstirnseitigen Gewindeende (36) die Führungsflanken verspannt sind gegen die Lastflanken am zapfenstirnseitigen Gewindeende (38) und die Zahnlücke im Zapfenelement um soviel breiter ist als der Zahn im Muffenelement, wie es sich aus dem Steigungsunterschied ergibt, wobei die maximale Verspannung an den Rändern des Gewindes erfolgt und zur Gewindemitte hin abnimmt.

2. Rohrverbinder mit einem Muffenelement (1, 23), das ein Innengewinde (2, 3, 25) und mit einem Zapfenelement (6, 7, 22), das ein damit verschraubbares Außengewinde (8, 9, 24) aufweist, wobei die Gewinde des Zapfen- und Muffenelementes voneinander abweichende Steigungen aufweisen und sich außen an die Gewindeabschnitte ein gewindefreier Abschnitt anschließen kann, der gegebenenfalls als metallischer Dichtsitz ausgebildet ist,
dadurch gekennzeichnet,
daß das Zapfenelement (502) eine durchgehend konstante Steigung (506) und das Muffenelement (501) zwei Abschnitte mit einer größeren Steigung (505) im Vergleich zum Zapfenelement (502) aufweist, wobei die Abschnitt in der Mitte einen Versatz zueinander aufweisen, so daß im Übergangsbereich zwischen den Abschnitten ein sich nicht in Kontakt befindlicher schmaler Zahn oder eine überbreite Lücke entsteht und die Zahnlücke außerhalb des Versatzes in einem Element um soviel breiter ist als der Zahn des anderen Elementes, wie es sich aus dem Steigungsunterschied ergibt, und in Verschraubposition, die dem Versatz (507) muffenstirnseitig benachbarten Lastflanken (508) axial verspannt sind gegen die dem Versatz (507) zapfenstirnseitig benachbarten Führungsflanken (511), wobei die maximale Verspannung in der Mitte des Gewindes erfolgt und zu den Rändern des Gewindes hin abnimmt.

3. Rohrverbinder nach einem der Ansprüche 1 oder 2,
dadurch gekennzeichnet,
daß Zapfen- und Muffengewinde mehrgängig, vorzugsweise zweigängig ausgeführt sind.

4. Rohrverbinder mit einem Muffenelement (1,23), das ein mehrgängiges, vorzugsweise zweigängiges Innengewinde und mit einem Zapfenelement (6, 7, 22), das ein damit verschraubbares mehrgängiges, vorzugsweise zweigängiges Außengewinde aufweist, wobei die Gewinde des Zapfen- und Muffenelementes teilweise voneinander abweichende Steigungen aufweisen und sich an die Gewindeabschnitte ein gewindefreier Abschnitt anschließen kann, der gegebenenfalls als metallischer Dichtsitz ausgebildet ist,
dadurch gekennzeichnet,
daß die Gänge (606, 607, 706, 707) des mehrgängig, vorzugsweise zweigängig ausgeführten Zapfengewindes (602, 702) eine gleiche, durchgehend konstante Steigung aufweisen und daß ein Gang des Muffenelementes (601, 701) eine größere konstante Steigung (610, 710) als die Gänge des Zapfenelementes aufweist und der/die anderen Gänge dieselbe konstante Steigung (605, 705), wie das Zapfenelement aufweist, so daß Last- und Führungsflanken gegeneinander verspannt sind.

5. Rohrverbinder nach Anspruch 4,
dadurch gekennzeichnet,
daß die Position (611) der stirnseitigen Gewindegang-Anfänge des Muffengewindes (601) so festgelegt ist, daß sich die Lastflanken des einen Ganges zum zapfenstirnseitigen Gewindeende hin progressiv gegen die Führungsflanken des anderen Ganges über die Gewindelänge hin gleichmäßig verspannen.

6. Rohrverblnder nach Anspruch 4,
**dadurch gekennzeichnet,**
daß die Position der stirnseitigen Gewindegang-Anfänge des Muffengewindes (601) so festgelegt ist,daß sich die Führungsflanken des einen Ganges zum muffenstirnseitigen Gewindeende hin gegen die Lastflanken des zapfenstirnseitigen Gewindeendes desselben Ganges verspannen.

7. Rohrverbinder nach Anspruch 4,
**dadurch gekennzeichnet,**
daß die Position (711) der stirnseitigen Gewindegang-Anfänge des Muffengewindes (701) so festgelegt ist, daß sich die Führungsflanken des einen Ganges zum muffenstirnseitigen Gewindeende hin progressiv gegen die Lastflanken des anderen Ganges über die Gewindelänge hin gleichmäßig verspannen.

8. Rohrverbinder nach Anspruch 4,
**dadurch gekennzeichnet,**
daß das Zapfengewinde (602,702) mehrgängig, vorzugsweise zweigängig ausgeführt ist und beide Gänge eine gleiche, durchgehend konstante Steigung aufweisen und daß ein Gang des Muffenelementes (601,701) dieselbe konstante Steigung wie die Gänge des Zapfenelementes (602,702) aufweist und ein zweiter Gang eine kleinere konstante Steigung.

9. Rohrverbinder nach Anspruch 8,
**dadurch gekennzeichnet,**
daß die Position der stirnseitigen Gewindegang-Anfänge des Muffengewindes so festgelegt ist, daß sich die Lastflanken des einen Ganges zum muffenstirnseitigen Gewindeende hin progressiv gegen die Führungsflanken des anderen Ganges über die Gewindelänge hin gleichmäßig verspannen.

10. Rohrverbinder nach Anspruch 8,
**dadurch gekennzeichnet,**
daß die Position der stirnseitigen Gewindegang-Anfänge des Muffengewindes so festgelegt ist, daß sich die Lastflanken des einen Ganges zum muffenstirnseitigen Gewindeende hin gegen die Führungsflanken des zapfenstirnseitigen Gewindeendes desselben Ganges verspannen.

11. Rohrverbinder nach Anspruch 8,
**dadurch gekennzeichnet,**
daß die Position der stirnseitigen Gewindegang-Anfänge des Muffengewindes so festgelegt ist, daß sich die Führungsflanken des einen Ganges zum zapfenstirnseitigen Gewindeende hin progressiv gegen die Führungsflanken des anderen Ganges über die Gewindelänge hin gleichmäßig verspannen.

12. Rohrverbinder mit einem Muffenelement (1,23), das ein mehrgängiges, vorzugsweise zweigängiges Innengewinde und mit einem Zapfenelement (6,7,22), das ein damit verschraubbares mehrgängiges, vorzugsweise zweigängiges Außengewinde aufweist, wobei die Gewinde des Zapfen- und Muffenelementes teilweise voneinander abweichende Steigungen aufweisen und sich an die Gewindeabschnitte ein gewindefreier Abschnitt anschließen kann, der gegebenenfalls als metallischer Dichtsitz ausgebildet ist,
dadurch gekennzeichnet,
daß die Gänge des mehrgängig, vorzugsweise zweigängig ausgeführten Zapfengewindes eine gleiche, durchgehend konstante Steigung aufweisen und daß ein Gang des Muffenelementes eine größere konstante Steigung als die Gänge des Zapfenelementes aufweist und ein zweiter Gang eine kleinere konstante Steigung, so daß Last- und Führungsflanken gegeneinander verspannt sind.

13. Rohrverbinder nach Anspruch 12,
dadurch gekennzeichnet,
daß die Position der stirnseitigen Gewindegang-Anfänge des Muffengewindes so festgelegt ist, daß sich die Führungsflanken des einen Ganges zum muffenstirnseitigen Gewindeende hin progressiv gegen die Lastflanken des anderen Ganges zum muffenstirnseitigen Gewindeende hin ebenfalls progressiv verspannen.

14. Rohrverbinder nach Anspruch 12,
**dadurch gekennzeichnet,**
daß die Positfon der stirnseitigen Gewindegang-Anfänge des Muffengewindes so festgelegt ist, daß sich die Führungsflanken des einen Ganges zum muffenstirnseitigen Gewindeende hin und die Führungsflanken des anderen Ganges zum zapfenstirnseitigen Gewindeende hin gegen die Lastflanken des anderen Ganges zum muffenstirnseitigen Gewindeende hin verspannen.

15. Rohrverbinder nach Anspruch 12,
**dadurch gekennzeichnet,**
daß die Position der stirnseitigen Gewindegang-Anfänge des Muffengewindes so festgelegt ist, daß sich die Führungsflanken des einen Ganges zum zapfenstirnseitigen Gewindeende hin ebenfalls progressiv verspannen.

16. Rohrverbinder nach den Ansprüchen 1 bis 15,
**dadurch gekennzeichnet,**
daß das Maß des Steigungsunterschiedes zwischen Zapfen (6,7,22) und Muffe (1,23) mindestens 0,005mm/Zoll und maximal 0,4mm/Zoll beträgt, bei mehrgängigen Gewinden ein entsprechend Mehrfaches davon.

17. Rohrverbinder nach den Ansprüchen 1 bis 16,
**dadurch gekennzeichnet,**
daß die innenliegende Stirnfläche des Muffen-(1,23) und die außenliegende Stirnfläche des Zapfenelementes (6,7,22) im jeweils gewindefreien Abschnitt so ausgebildet sind,daß sie eine Stoßschulter bilden.

## Claims

1. Pipe coupling with a socket element (1, 23), which comprises an internal thread (2, 3, 25), and with a spigot element (6, 7, 22), which comprises an external thread (8, 9, 24) which can be screwed to the internal thread, wherein the threads of the spigot and of the socket element have pitches which differ from one another, and a plain portion, which is optionally formed as a metallic sealing seat, may adjoin the threaded portions,
characterised in that the spigot element (32) has a continuous constant pitch (34) and the socket element (31) has a constant greater pitch (33), so that at the thread end (36) which is at the front of the socket the guide flanks are clamped against the load flanks at the thread end (38) which is at the front of the spigot, and the tooth space in the spigot element is wider than the tooth in the socket element by the difference in pitch, wherein maximum clamping takes place at the edges of the thread and decreases towards the thread centre.

2. Pipe coupling with a socket element (1, 23), which comprises an internal thread (2, 3, 25), and with a spigot element (6, 7, 22), which comprises an external thread (8, 9, 24) which can be screwed to the internal thread, wherein the threads of the spigot and of the socket element have pitches which differ from one another, and a plain portion, which is optionally formed as a metallic sealing seat, may adjoin the threaded portions on the outside,
characterised in that the spigot element (502) has a pitch (506) which is constant throughout, and the socket element (501) comprises two portions with a greater pitch (505) than that of the spigot element (502), wherein the portion in the centre is offset, so that in the transition region between the portions a narrow tooth is not in contact or an overwide space results and the tooth space outside of the offset is wider in one element than the tooth of the other element by the difference in pitch, and the load flanks (508) adjacent to the offset (507) at the front of the socket are axially clamped against the guide flanks (511) adjacent to the offset (507) at the front of the spigot in the screwed position, wherein maximum clamping takes place in the centre of the thread and decreases towards the edges of the thread.

3. Pipe coupling according to claim 1 or 2,
characterised in that the spigot and socket threads are of multistart, preferably two-start construction.

4. Pipe coupling with a socket element (1, 23), which comprises a multistart, preferably two-start internal thread, and with a spigot element (6, 7, 22), which comprises a multistart, preferably two-start external thread which can be screwed to the internal thread, wherein the threads of the spigot and socket element have pitches which differ from one another in part, and a plain portion, which is optionally formed as a metallic sealing seat, may adjoin the threaded portions,
characterised in that the turns (606, 607, 706, 707) of the multistart, preferably two-start spigot thread (602, 702) have an equal pitch which is constant throughout, and that one turn of the socket element (601, 701) has a greater constant pitch (610, 710) than the turns of the spigot element, and the other turn(s) has/have the same constant pitch (605, 705) as the spigot element, so that load and guide flanks are clamped against one another.

5. Pipe coupling according to claim 4,
characterised in that the position (611) of the thread turn starts, at the front, of the socket thread (601) is determined so as to cause progressive clamping of the load flanks of one turn towards the thread end at the front of the spigot against the guide flanks of the other turn uniformly over the thread length.

6. Pipe coupling according to claim 4,
characterised in that the position of the thread turn starts, at the front, of the socket thread (601) is determined so as to cause clamping of the guide flanks of one turn towards the thread end at the front of the socket against the load flanks of the thread end, at the front of the spigot, of the same turn.

7. Pipe coupling according to claim 4,
characterised in that the position (711) of the thread turn starts, at the front, of the socket thread (701) is determined so as to cause progressive clamping of the guide flanks of one turn towards the thread end at the front of the socket against the load flanks of the other turn uniformly over the thread length.

8. Pipe coupling according to claim 4,
characterised in that the spigot thread (602, 702) is of multistart, preferably two-start construction, and both turns have an equal pitch which is constant throughout, and that one turn of the socket element (601, 701) has the same constant pitch as the turns of the spigot element (602, 702), and a second turn has a smaller constant pitch.

9. Pipe coupling according to claim 8,
characterised in that the position of the thread turn starts, at the front, of the socket thread is determined so as to cause progressive clamping of the load flanks of one turn towards the thread end at the front of the socket against the guide flanks of the other turn uniformly over the thread length.

10. Pipe coupling according to claim 8,
characterised in that the position of the thread turn starts, at the front, of the socket thread is determined so as to cause clamping of the load flanks of one turn towards the thread end at the front of the socket against the guide flanks of the thread end, at the front of the spigot, of the same turn.

11. Pipe coupling according to claim 8,
characterised in that the position of the thread turn starts, at the front, of the socket thread is determined so as to cause progressive clamping of the guide flanks of one turn towards the thread end at the front of the spigot against the guide flanks of the other turn uniformly over the thread length.

12. Pipe coupling with a socket element (1, 23), which comprises a multistart, preferably two-start internal thread, and with a spigot element (6, 7, 22), which comprises a multistart, preferably two-start external thread which can be screwed to the internal thread, wherein the threads of the spigot and socket element have pitches which differ from one another in part, and a plain portion, which is optionally formed as a metallic sealing seat, may adjoin the threaded portions,
characterised in that the turns of the multistart, preferably two-start spigot thread have an equal pitch which is constant throughout, and that one turn of the socket element has a greater constant pitch than the turns of the spigot element, and a second turn has a smaller constant pitch, so that load and guide flanks are clamped against one another.

13. Pipe coupling according to claim 12,
characterised in that the position of the thread turn starts, at the front, of the socket thread is determined so as to likewise cause progressive clamping of the guide flanks of one turn towards the thread end at the front of the socket progressively against the load flanks of the other turn towards the thread end at the front of the socket.

14. Pipe coupling according to claim 12,
characterised in that the position of the thread turn starts, at the front, of the socket thread is determined so as to cause clamping of the guide flanks of one turn towards the thread end at the front of the socket and of the guide flanks of the other turn towards the thread end at the front of the spigot against the load flanks of the other turn towards the thread end at the front of the socket.

15. Pipe coupling according to claim 12,
characterised in that the position of the thread turn starts, at the front, of the socket thread is determined so as to likewise cause progressive clamping of the guide flanks of one turn towards the thread end at the front of the spigot.

16. Pipe coupling according to claims 1 to 15,
characterised in that the degree of the difference in pitch between the spigot (6, 7, 22) and the socket (1, 23) is at least 0.005 mm/inch and at most 0.4 mm/inch and a corresponding multiple thereof for multistart threads.

17. Pipe coupling according to claims 1 to 16,
characterised in that the inner front face of the socket element (1, 23) and the outer front face of the spigot element (6, 7, 22) in the respective plain portion are formed such that they create an abutting shoulder.

## Revendications

1. Raccord de tubes, comportant un élément de manchon (1,23), qui présente un filetage interne (2,3,25), et un élément de tourillon (6,7,22), qui présente un filetage externe (8,9,24) pouvant être vissé sur celui-ci, les filetages de l'élément de tourillon et de l'élément de manchon présentant des pas s'écartant l'un de l'autre, et un tronçon sans filetage pouvant se raccorder aux tronçons filetés, lequel est réalisé, le cas échéant, comme siège d'étanchéité métallique,
caractérisé en ce que l'élément de tourillon (32) présente un pas constant continu (34) et l'élément de manchon (31) présente un pas constant plus grand (33), de sorte que, sur l'extrémité filetée (36) de la face frontale du manchon, les flancs de guidage sont serrés contre les flancs de charge à l'extrémité filetée (38) de la face frontale du tourillon, et l'entredent dans l'élément de tourillon est plus large que la dent dans l'élément de manchon en fonction de la différence de pas, le serrage maximal étant effectué sur les bords du filetage et diminuant vers le centre du filetage.

2. Raccord de tubes, comportant un élément de manchon (1,23), qui présente un filetage interne (2,3,25), et un élément de tourillon (6,7,22), qui présente un filetage externe (8,9,24) pouvant être vissé sur celui-ci, les filetages de l'élément de tourillon et de l'élément de manchon présentant des pas s'écartant l'un de l'autre, et un tronçon sans filetage pouvant se raccorder, extérieurement, aux tronçons filetés, lequel est réalisé, le cas échéant, comme siège d'étanchéité métallique,
caractérisé en ce que l'élément de tourillon (502) présente un pas constant continu (506) et l'élément de manchon (501) présente deux troncons ayant un plus grand pas (505) par rapport à l'élément de tourillon (502), les troncons au centre présentant un décalage l'un par rapport à l'autre, de sorte que, dans la zone de transition entre les tronçons, il existe une dent étroite ne se trouvant pas en contact ou un vide plus large, et l'entredent à l'extérieur du décalage dans un élément est plus large que la dent de l'autre élément en fonction de la différence de pas et, dans la position de vissage, les flancs de charge (508) voisins, du côté frontal du manchon, du décalage (507) sont serrés axialement contre les flancs de guidage (511) voisins, du côté frontal du tourillon, du décalage (507), le serrage maximal étant effectué au centre du filetage et diminuant vers les bords du filetage.

3. Raccord de tubes selon une des revendications 1 ou 2,
caractérisé en ce que le filetage du tourillon et le filetage du manchon sont réalisés en ayant plusieurs filets, avantageusement deux filets.

4. Raccord de tubes, comportant un élément de manchon (1,23), qui présente un filetage interne à plusieurs filets, avantageusement deux filets, et un élément de tourillon (6,7,22), qui présente un filetage externe à plusieurs filets, avantageusement deux filets, pouvant être vissé sur celui-ci, les filetages de l'élément de tourillon et de l'élément de manchon présentant des pas s'écartant l'un de l'autre partiellement, et un tronçon sans filetage pouvant se raccorder aux tronçons filetés, lequel est réalisé, le cas échéant, comme siège d'étanchéité métallique,
caractérisé en ce que les filets (606,607,706,707) du filetage du tourillon (602,702) réalisé en ayant plusieurs filets, avantageusement deux filets, présentent un pas identique, continu constant, et en ce qu'un filet de l'élément de manchon (601,701) présente un pas constant plus grand (610,710) que les filets de l'élément de tourillon et le ou les autres filets présentent le même pas constant (605,705) que l'élément de tourillon, de sorte que les flancs de charge et les flancs de guidage sont serrés les uns contre les autres.

5. Raccord de tubes selon la revendication 4,
caractérisé en ce que la position (611) des débuts des filets frontaux du filetage du manchon (601) est telle que les flancs de charge d'un filet sont serrés uniformément vers l'extrémité du filetage du côté frontal du tourillon progressivement contre les flancs de guidage de l'autre filet sur la longueur du filetage.

6. Raccord de tubes selon la revendication 4,
caractérisé en ce que la position des débuts des filets frontaux du filetage du manchon (601) est telle que les flancs de guidage d'un filet sont serrés vers l'extrémité du filetage du côté frontal du manchon contre les flancs de charge de l'extrémité du filetage du côté frontal du tourillon de ce filet.

7. Raccord de tubes selon la revendication 4,
caractérisé en ce que la position (711) des débuts des filets frontaux du filetage du manchon (701) est telle que les flancs de guidage d'un filet sont serrés uniformément vers l'extrémité du filetage du côté frontal du manchon progressivement contre les flancs de charge de l'autre filet sur la longueur du filetage.

8. Raccord de tubes selon la revendication 4,
caractérisé en ce que le filetage (602,702) du tourillon est réalisé à plusieurs filets, avantageusement deux filets, et les deux filets présentent un pas identique, continu constant, et en ce qu'un filet de l'élément de manchon (601,701) présente ce pas constant comme les filets de l'élément de tourillon (602,702), et un second filet, un pas constant plus petit.

9. Raccord de tubes selon la revendication 8,
caractérisé en ce que la position des débuts des filets frontaux du filetage du manchon est telle que les flancs de charge d'un filet sont serrés uniformément vers l'extrémité du filetage du côté frontal du manchon progressivement contre les flancs de guidage de l'autre filet sur la longueur du filetage.

10. Raccord de tubes selon la revendication 8,
caractérisé en ce que la position des débuts des filets frontaux du filetage du manchon est telle que les flancs de charge d'un filet sont serrés vers l'extrémité du filetage du côté frontal du manchon contre les flancs de guidage de l'extrémité du filetage du côté frontal du tourillon de ce filet.

11. Raccord de tubes selon la revendication 8,
caractérisé en ce que la position des débuts des filets frontaux du filetage du manchon est telle que les flancs de guidage d'un filet sont serrés uniformément vers l'extrémité du filetage du côté frontal du tourillon progressivement contre les flancs de guidage de l'autre filet sur la longueur du filetage.

12. Raccord de tubes, comportant un élément de manchon (1,23), qui présente un filetage interne à plusieurs filets, avantageusement deux filets, et un élément de tourillon (6,7,22), qui présente un filetage externe à plusieurs filets, avantageusement deux filets, pouvant être vissé sur celui-ci, les filetages de l'élément de tourillon et de l'élément de manchon présentant des pas s'écartant l'un de l'autre partiellement, et un tronçon sans filetage pouvant se raccorder aux tronçons filetés, lequel est réalisé, le cas échéant, comme siège d'étanchéité métallique,
caractérisé en ce que les filets du filetage du tourillon réalisé en ayant plusieurs filets, de préférence deux filets, présentent un pas identique, continu constant, et en ce qu'un filet de l'élément de manchon présente un pas constant plus grand que les filets de l'élément de tourillon et un second filet présente un pas constant plus petit, de sorte que les flancs de charge et les flancs de guidage sont serrés les uns contre les autres.

13. Raccord de tubes selon la revendication 12,
caractérisé en ce que la position des débuts des filets frontaux du filetage du manchon est telle que les flancs de guidage d'un filet vers l'extrémité du filetage du côté frontal du manchon sont serrés progressivement contre les flancs de charge de l'autre filet vers l'extrémité du filetage du côté frontal du manchon de même progressivement.

14. Raccord de tubes selon la revendication 12,
caractérisé en ce que la position des débuts des filets frontaux du filetage du manchon est telle que les flancs de guidage d'un filet vers l'extrémité du filetage du côté frontal du manchon et les flancs de guidage de l'autre filet vers l'extrémité du filetage du côté frontal du tourillon sont serrés contre les flancs de charge de l'autre filet vers l'extrémité du filetage du côté du manchon.

15. Raccord de tubes selon la revendication 12,
caractérisé en ce que la position des débuts des filets frontaux du filetage du manchon est telle que les flancs de guidage d'un filet sont serrés de même progressivement vers l'extrémité du filetage du côté frontal du tourillon.

16. Raccord de tubes selon les revendications 1 à 15,
caractérisé en ce que la valeur de la différence de pas entre le tourillon (6,7,22) et le manchon (1,23) vaut au moins 0,005 mm/pouce et au maximum 0,4 mm/pouce ; pour des filetages à filets multiples, un multiple correspondant de celle-ci.

17. Raccord de tubes selon les revendications 1 à 16,
caractérisé en ce que la face frontale interne de l'élément de manchon (1,23) et la face frontale externe de l'élément de tourillon (6,7,22), dans le tronçon à chaque fois sans filetage, sont réalisées de sorte qu'elles forment un épaulement de butée.
